# EUROPEAN PATENT APPLICATION

(11) **EP 2 441 975 A2**
(43) Date of publication of application: **18.04.2012**
(21) Application number: 11160540.8
(22) Date of filing: 30.03.2011
(51) Int. Cl.: F16F 9/44

(54) **A shock absorber using air pressure**

(30) Priority: 15.10.2010 TH 160610
(71) Applicant: Y.S.S. (Thailand) Co. Ltd., 10540 Samutprakarn (TH)
(72) Inventor: Panichgasem, Pinyo, 10320, Bangkok (TH)
(74) Representative: Novagraaf Technologies

(57) **Abstract**

The present invention provides a shock absorber, "AIR FORCE", that uses air pressure to support the weight of a vehicle. The shock absorber of the present invention comprises of a damper (15), which is a cylinder (19) filled with oil and gas pressure, and an air pressure adjusting assembly (18). During the use, the piston (9) presses against the air inside the cylinder (19). The softness and the hardness of the shock absorber is adjustable using an adjuster (18). The present shock absorber of the present invention use air pressure to support the weight of the vehicle instead of the use of spring. By manipulating the air pressure inside the cylinder (19), the softness and the hardness of the shock absorber can be adjusted. In addition, it can be used accompany with a damper.

## Description

### FIELD OF THE INVENTION

Mechanical Engineering, pneumatics, hydraulics, automobile industry

### BACKGROUND OF THE INVENTION

The shock absorber of the present invention "AIR FORCE" relates to the shock absorber of an automobile. The shock absorber of the present invention uses gas pressure to support weight and provide elasticity. The replacement of spring coil by the gas pressure results in reducing weight of the shock absorber.

The objective of the present invention is to provide a shock absorber which can satisfy the need for the higher performance of the end user which can not be provided by the shock absorber of the prior art. The use of gas pressure is superior to the use of spring due to the reduction in weight of the shock absorber and also allows the vehicle to have better stability.

The commonly available shock absorber comprises of a spring coil that acts as a supporter for the vehicle weight and resists compressive force and impact. A preload is provided for adjusting the stiffness of the spring coil. A damper that damps the oscillation of the spring is also provided to introduce the stability of the vehicle.

### BRIEF DESCRIPTION OF THE DRAWINGS

Figure 1 is a schematic diagram of the shock absorber of the present invention and a cross sectional diagram of the gas pressure adjusting system.
Figure 2 is the cross sectional diagram along the length of the shock absorber of the present invention that use gas pressure to support the weight instead of the use of spring coil.
Figure 3 is another cross section diagram of the shock absorber of the present invention that uses gas pressure to support the weight instead of the use of spring.

### DETAIL DESCRIPTION OF THE PREFERRED EMBODIMENTS

The present invention provides a shock absorber "AIR FORCE" for a vehicle. The shock absorber of the present invention is designed to use gas pressure for supporting the weight of the vehicle and to provide elasticity instead of the use of spring coil. This results in the reduction in the overall weight of the shock absorber.

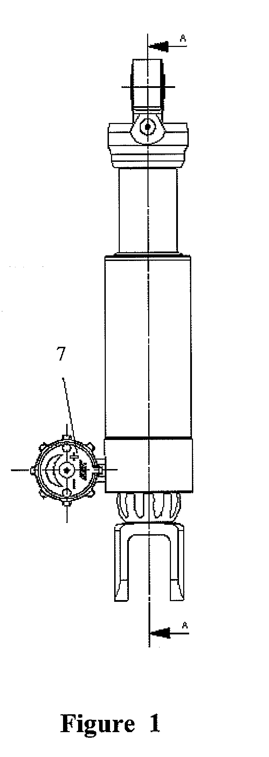

The structure and components of the shock absorber of the present invention "AIR FORCE" are shown in figures 1-3. Figure 1 is a schematic diagram of the shock absorber and a cross sectional diagram of the gas pressure adjusting system, adjuster Knob (7).

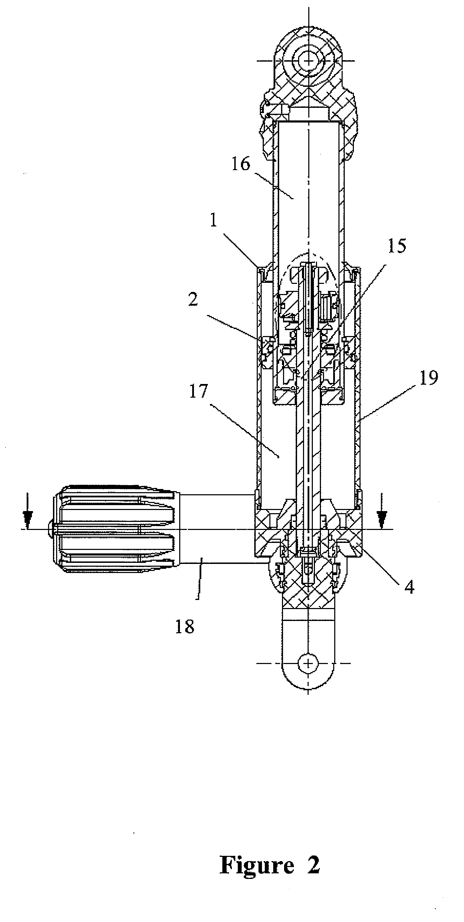

Figure 2 is the cross sectional diagram along the length of the shock absorber. This figure shows the interior component which comprises of a damper (15) which is filled with hydraulics oil and nitrogen gas (16). The outer surface of the damper (15) is surrounded with a cylinder cover. A guide tube cover (2) supports the inner cylinder and the outer cylinder cover (19) and also prevent the leakage of the gas inside.

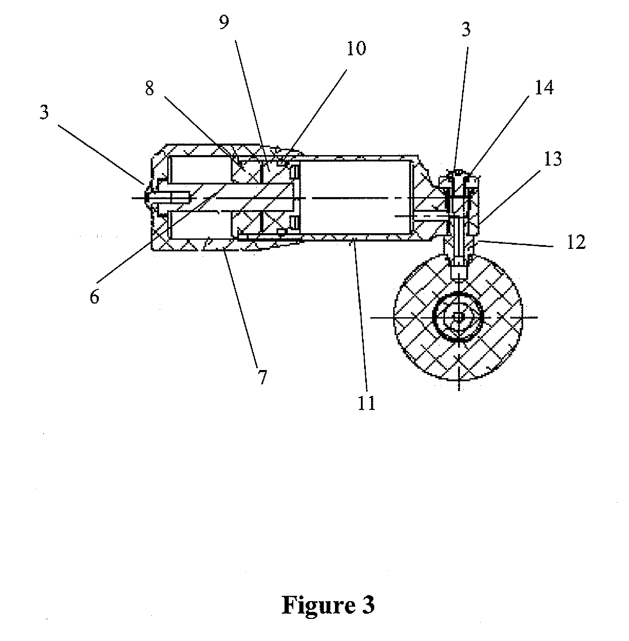

Figure 3 is another cross section diagram of the shock absorber of the present invention that uses gas pressure to support the weight instead of the use of spring. The outer cylinder cover (19) contains and prevents the leakage of the gas inside the cylinder. A shaft lock (4) is provided at the bottom of the cylinder to prevent the leakage of the gas. This shaft lock (4) also joins the outer cylinder cover (19) and the bottom base together. A pressure adjuster (18) is provided on the outside.

The working principle of the "AIR FORCE" is as follows. The piston (9) presses against the gas contained in the gas reservoir (11). The movement of the piston increases the pressure of the gas contained in the gas reservoir with the force provided from the adjuster (6). The function of the adjuster (6) is manipulating the gas pressure to adjust the softness/hardness of the shock absorber.

The knob adjuster (7) is provided for manually adjusting the gas pressure. The gas pressure can be easily adjusted with the help of the knob adjuster (7). The o-ring 23x3 (10) act as a seal that prevents the leakage of the gas inside the reservoir (11). An air screw M10 (13) is provided for filling gas into the reservoir (11). The o-ring 4x2 (14) also acts as a seal that prevents the leakage of the gas inside the reservoir (11).

The spring coil of the shock absorber of the prior art is replaces with the outer cylinder cover in order to provide the need for higher performance. The gas pressure can be increased in case higher load has to be countered. The shock absorber of the present invention "AIR FORCE" has reduced weight and provides better stability for the vehicle.

## Claims

1. A shock absorber "AIR FORCE" which comprises of :
a damper (15) which is filled with hydraulics oil and gas (16), a guide tube cover (2) which supports the cylinder, a outer cylinder cover (19) which contains and prevent the leakage of the gas inside, and a shaft lock (4) which prevents the leakage of the gas at the bottom of the cylinder and also joins the outer cylinder cover and the bottom base together. A pressure adjuster (18) is provided on the outside.
The working principle of the "AIR FORCE" is as follows. The piston (9) presses against the gas contained in the gas reservoir (11) which acts as the gas container. The movement of the piston increases the pressure of the gas contained in the gas reservoir with the force provided from the adjuster (6). The function of the adjuster (6) is manipulating the gas pressure to adjust the hardness of the shock absorber. The knob adjuster (7) is provided for manually adjusting the gas pressure. The o-ring 23x3 (10) act as a seal that prevents the leakage of the gas inside the reservoir (11). An air screw M10 (13) is provided for filling gas into the reservoir (11). The o-ring 4x2 (14) also acts as a seal that prevents the leakage of the gas inside the reservoir (11).
The shock absorber of the present invention "AIR FORCE" replaces spring coil with gas pressure. The gas pressure can be adjusted to provide the satisfied softness/hardness with the help of the damper (15).
